# EUROPÄISCHE PATENTSCHRIFT

(11) **EP 2 861 468 B1**
(45) Veröffentlichungstag und Bekanntmachung des Hinweises auf die Patenterteilung: **24.10.2018**
(21) Anmeldenummer: 13727839.6
(22) Anmeldetag: 31.05.2013
(51) Int. Cl.: B60S 1/38

(54) **SCHEIBENWISCHBLATTVORRICHTUNG**
WINDSCREEN WIPER BLADE DEVICE
DISPOSITIF DE BALAI D'ESSUIE-GLACE

(30) Priorität: 14.06.2012 DE 102012209975
(43) Veröffentlichungstag der Anmeldung: 22.04.2015
(73) Patentinhaber: Robert Bosch GmbH, 70442 Stuttgart (DE)
(72) Erfinder: BENNER, Andreas, Taipei 104 (TW); BAUMERT, Stefan, 76139 Karlsruhe (DE); PICHLER, Andreas, 76646 Bruchsal (DE); OBERT, Mike, 76593 Gernsbach (DE)
(86) Internationale Anmeldenummer: PCT/EP2013/061267
(87) Internationale Veröffentlichungsnummer: WO 2013/186068

(56) Entgegenhaltungen:
- EP-A2- 1 733 939
- WO-A1-2004/054860
- DE-A1-102004 005 258
- US-A1- 2008 201 894
- US-A1- 2008 295 273
- US-A1- 2010 005 608

## Beschreibung

### Stand der Technik

Aus DE 196 50 929 A1 ist bereits eineScheibenwischblattvorrichtung mit einer Federschiene, die in Längsrichtung der Federschiene betrachtet eine Vielzahl von Ausnehmungen aufweist, und mit einer von der Federschiene getrennt ausgebildeten Befestigungseinheit, die in einem montierten Zustand in die Ausnehmungen der Federschiene eingreift, und dazu vorgesehen ist, eine Wischleisteneinheit an der Federschiene zu fixieren, bekannt. EP-A-1733939 offenbart den Oberbegriff des Anspruchs 1.

### Offenbarung der Erfindung

Es wird eine Scheibenwischblattvorrichtung mit zumindest einer Federschiene, die in Längsrichtung der Federschiene betrachtet eine Vielzahl von Ausnehmungen aufweist, mit zumindest einer Spoilereinheit und mit zumindest einer von der Federschiene getrennt ausgebildeten Befestigungseinheit, die in zumindest einem montierten Zustand in die Ausnehmungen der Federschiene eingreift, und dazu vorgesehen ist, eine Wischleisteneinheit und die Spoilereinheit an der Federschiene zu fixieren, vorgeschlagen. Unter einer "Federschiene" soll insbesondere ein makroskopisches Element verstanden werden, das zumindest eine Erstreckung aufweist, die in einem normalen Betriebszustand um zumindest 10 %, insbesondere um wenigstens 20 %, vorzugsweise um mindestens 30 % und besonders vorteilhaft um zumindest 50 % elastisch veränderbar ist, und das insbesondere eine von einer Veränderung der Erstreckung abhängige und vorzugsweise zu der Veränderung proportionale Gegenkraft erzeugt, die der Veränderung entgegenwirkt. Unter einer "Erstreckung" eines Elements soll insbesondere ein maximaler Abstand zweier Punkte einer senkrechten Projektion des Elements auf eine Ebene verstanden werden. Unter einem "makroskopischen Element" soll insbesondere ein Element mit einer Erstreckung von zumindest 1 mm, insbesondere von wenigstens 5 mm und vorzugsweise von mindestens 10 mm verstanden werden. Vorzugsweise ist die Federschiene zumindest teilweise aus einem Federstahl ausgebildet. Vorzugsweise weist die Federschiene in einem unbelasteten Zustand im Wesentlichen eine Form eines gebogenen Stabs und besonders vorteilhaft eines abgeflachten, gebogenen Stabs auf. Besonders vorteilhaft ist eine Krümmung der Federschiene entlang einer Längserstreckung in einem unbelasteten Zustand größer als eine Krümmung einer Fahrzeugoberfläche eines Kraftfahrzeugs, insbesondere einer Fahrzeugscheibe, über welche die Federschiene in wenigstens einem Betriebszustand geführt wird. Unter einer "Wischleisteneinheit" soll insbesondere eine Einheit aus einem elastischen Material mit zumindest einer Wischlippeneinheit, mit zumindest einem Kopfbereich und mit zumindest einem Kippsteg, der dazu vorgesehen ist, die Wischlippeneinheit mit dem Kopfbereich zu verbinden, verstanden werden. Bevorzugt ist die Wischleisteneinheit aus einem natürlichen oder künstlichen Elastomer, insbesondere aus Gummi, hergestellt. Unter einer "Wischlippeneinheit" soll insbesondere eine Einheit verstanden werden, die zu einer Reinigung einer zu reinigenden Fläche, insbesondere einer Scheibenfläche, vorzugsweise einer Scheibenfläche eines Kraftfahrzeugs, vorgesehen ist und die dazu vorgesehen ist, in einem Kontakt über die zu reinigende Fläche bewegt zu werden. Unter einem "Kopfbereich" soll insbesondere ein Bereich einer Wischleisteneinheit verstanden werden, der in zumindest einem Betriebszustand der Wischleisteneinheit, in dem die Wischleisteneinheit zu einer Reinigung einer zu reinigenden Fläche vorgesehen ist, einen von der zu reinigenden Fläche wegweisenden Endbereich der Wischleisteneinheit ausbildet. Insbesondere ist der Kopfbereich zu einer Kopplung mit zumindest einem weiteren Bauteil, insbesondere mit einer Befestigungseinheit und/oder mit einer Federschiene, vorgesehen. Vorzugsweise ist die Wischleisteneinheit in zumindest einem montierten Zustand mittels des Kopfbereichs an der Befestigungseinheit und/oder an der Federschiene befestigt. Unter einem "Kippsteg" soll insbesondere ein Bereich einer Wischleisteneinheit verstanden werden, der dazu vorgesehen ist, die Wischlippeneinheit mit dem Kopfbereich zu verbinden. Insbesondere ist der Kippsteg dazu vorgesehen, die Wischlippeneinheit beweglich an dem Kopfbereich zu lagern. Vorzugsweise ist der Kippsteg dazu vorgesehen, in zumindest einem Betriebszustand der Scheibenwischblattvorrichtung ein Umklappen einer Wischleisteneinheit, insbesondere einer Wischlippeneinheit, bei einer Änderung einer Bewegungsrichtung der Scheibenwischblattvorrichtung zu ermöglichen. Unter einer "Spoilereinheit" soll insbesondere eine Einheit verstanden werden, die in zumindest einem montierten Zustand der Scheibenwischblattvorrichtung dazu vorgesehen ist, eine Aerodynamik der Scheibenwischblattvorrichtung in zumindest einem Betriebszustand der Scheibenwischblattvorrichtung derart zu beeinflussen, dass die Scheibenwischblattvorrichtung bei einer Bewegung eines die Scheibenwischblattvorrichtung aufweisenden Fahrzeugs, insbesondere Kraftfahrzeugs, an einer zu reinigenden Fläche haften bleibt. Insbesondere ist die Spoilereinheit aus einem elastischen Material ausgebildet, um eine Anpassung der Wischleisteneinheit an die zu reinigende Fläche zu unterstützen. Vorzugsweise ist die Spoilereinheit aus Gummi ausgebildet. Unter einer "Befestigungseinheit" soll insbesondere eine Einheit verstanden werden, die in zumindest einem montierten Zustand in die Ausnehmungen der Federschiene eingreift, und dazu vorgesehen ist, die Wischleisteneinheit und die Spoilereinheit an der Federschiene zu fixieren. Insbesondere ist die Befestigungseinheit derart ausgebildet, dass ein unbeabsichtigtes Lösen der Befestigungseinheit in zumindest einem Betriebszustand der Scheibenwischblattvorrichtung vermieden werden kann. Vorzugsweise ist die Befestigungseinheit aus einem Kunststoff ausgebildet. Durch eine erfindungsgemäße Ausgestaltung können vorteilhaft die Wischleisteneinheit, der Spoiler und die Federscheine dauerhaft und auf eine einfache Art und Weise miteinander verbunden werden.

Ferner wird vorgeschlagen, dass die Befestigungseinheit als Klammer ausgebildet ist. Insbesondere ist die Befestigungseinheit als federnde Klammer ausgebildet. Unter einer "Klammer" soll insbesondere ein Element verstanden werden, das bei einem Befestigungsvorgang elastisch ausgelenkt wird, um anschließend durch eine innere Spannkraft hinter einem korrespondierenden Element, insbesondere einer Federschiene, einzurasten. Insbesondere ist die Klammer dazu vorgesehen, in die Ausnehmungen der Federschiene einzugreifen. Vorzugsweise ist in einem montieren Zustand der Klammer an der Federschiene ein Ende der Klammer auf einer Seite der Federschiene angeordnet und ein weiteres, dem einen Ende entgegengesetztes Ende der Klammer auf einer weiteren, der einen Seite entgegengesetzten Seite der Federschiene angeordnet. Insbesondere umgreift die Federschiene die Klammer in dem montierten Zustand. Die Klammer kann einteilig ausgebildet sein, so dass eine Längsausdehnung der Klammer zumindest im Wesentlichen einer Längsausdehnung der Federschiene entspricht. Insbesondere weist eine einteilig ausgebildete Klammer bei Betrachtung in der Längsrichtung der Federschiene an einer der Federschiene zuweisenden Seite Schlitze mit einer entsprechend einem Abstand der Ausnehmungen in der Federschiene ausgebildeten Breite auf, so dass die Befestigungseinheit in dem montierten Zustand in die Ausnehmungen eingreifen kann. Vorzugsweise sind die Schlitze zudem dazu vorgesehen, eine Biegesteifigkeit der Befestigungseinheit und damit einen Einfluss der Befestigungseinheit auf die Federschiene zu reduzieren. Alternativ zu einer einteilig ausgebildeten Klammer kann die Klammer mehrteilig ausgebildet sein, wobei eine maximale Anzahl an Klammern durch eine Anzahl an Ausnehmungen in der Federschiene begrenzt ist. Durch eine erfindungsgemäße Ausgestaltung können vorteilhaft die Wischleisteneinheit, der Spoiler und die Federscheine dauerhaft und auf eine einfache Art und Weise miteinander verbunden werden. Ferner kann eine schnell lösbare, sichere Verbindung der Wischleisteneinheit, des Spoilers und der Federschiene erreicht werden.

Nach der Erfindung ist die Befestigungseinheit in dem montierten Zustand durch die Wischleisteneinheit fixiert. Insbesondere ist die Wischleisteneinheit als ein Klemmkörper ausgebildet, der zwischen zwei einander gegenüberliegenden, aufeinander zuweisenden Klemmmitteln der Befestigungsvorrichtung angeordnet ist und verhindert, dass die Klemmmittel aufeinander zubewegt werden können. Durch eine erfindungsgemäße Ausgestaltung kann vorteilhaft ein weiteres Bauteil zu einer Fixierung der Befestigungsvorrichtung eingespart werden. Zudem kann die Wischleisteneinheit in einer einfachen Art und Weise dauerhaft an der Federschiene fixiert werden.
Weiterhin wird vorgeschlagen, dass die Befestigungseinheit zumindest zwei Bereiche mit differierenden Querschnittsflächen aufweist. Beispielsweise kann eine einteilig ausgebildete Befestigungseinheit bei Betrachtung in der Längsrichtung der Federschiene an einer der Federschiene zuweisenden Seite Schlitze mit einer entsprechend einem Abstand der Ausnehmungen in der Federschiene ausgebildeten Breite aufweisen, so dass die Befestigungseinheit in dem montierten Zustand in die Ausnehmungen eingreifen kann. In diesem Fall sind die zwei Bereiche mit differierenden Querschnittsflächen durch einen Bereich der Schlitze und einen den Schlitzen benachbarten sowie den Ausnehmungen der Federschiene korrespondierenden Bereich ausgebildet. Alternativ oder zusätzlich zu den Schlitzen kann die Befestigungseinheit in einem den Ausnehmungen der Federschiene korrespondierenden Bereich, der in einem montierten Zustand der Befestigungseinheit an der Federschiene in einem Abschnitt eines Adapters zu liegen kommt, eine reduzierte Querschnittfläche im Vergleich zu den den Ausnehmungen der Federschiene korrespondierenden benachbarten Bereichen aufweisen. Durch eine erfindungsgemäße Ausgestaltung kann vorteilhaft die Befestigungseinheit problemlos und einfach an der Federschiene angebracht werden. Zudem kann ein Abschnitt eines Adapters vorteilhaft berücksichtigt und damit eine variable, auf verschiedene Ausformungen von Federschienen zugeschnittene Befestigungseinheit erreicht werden.

In einer weiteren Ausgestaltung der Erfindung wird ein Wischblatt mit einer erfindungsgemäßen Scheibenwischblattvorrichtung vorgeschlagen. Durch eine erfindungsgemäße Ausgestaltung kann vorteilhaft ein Wischblatt mit einer erfindungsgemäßen Scheibenwischblattvorrichtung ausgestattet werden, wodurch ein einfach zu montierendes Wischblatt erreicht werden kann. Insbesondere können auf eine einfache Art und Weise die Wischleisteneinheit, der Spoiler und die Federscheine dauerhaft miteinander verbunden werden.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen Ausschnitt einer erfindungsgemäßen Federschiene und einer erfindungsgemäßen Befestigungseinheit vor einer Montage,
- Fig. 2: die erfindungsgemäße Federschiene und die erfindungsgemäße Befestigungseinheit aus Fig. 1 nach der Montage in einem Querschnitt,
- Fig. 3: die erfindungsgemäße Scheibenwischblattvorrichtung in einem montierten Zustand und
- Fig. 4: ein Endbereich der Scheibenwischblattvorrichtung aus Fig. 3 bei einer Montage.

### Beschreibung der Ausführungsbeispiele

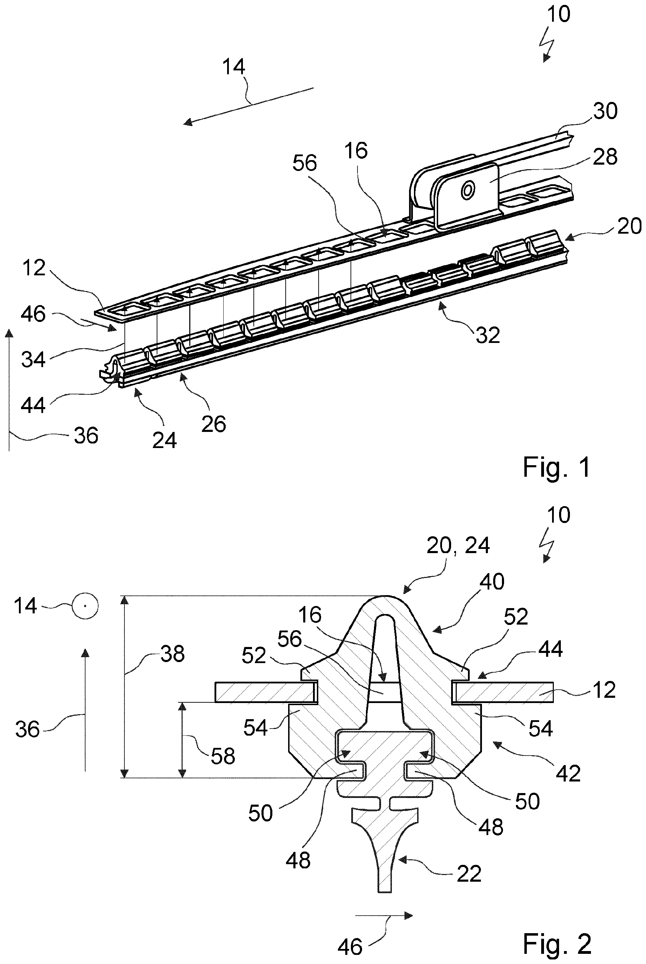

Fig. 1 zeigt einen Ausschnitt einer erfindungsgemäßen Federschiene 12 und einer erfindungsgemäßen Befestigungseinheit 20 vor einer Montage. Die Federschiene 12 und die Befestigungseinheit 20 sind Bestandteile einer erfindungsgemäßen Scheibenwischblattvorrichtung 10. Ausgestattet ist die erfindungsgemäße Scheibenwischblattvorrichtung 10 mit der Federschiene 12, die in Längsrichtung 14 der Federschiene 12 betrachtet eine Vielzahl von Ausnehmungen 16 aufweist, mit einer Spoilereinheit 18 und mit der von der Federschiene 12 getrennt ausgebildeten Befestigungseinheit 20, die in einem montierten Zustand in die Ausnehmungen 16 der Federschiene 12 eingreift, und dazu vorgesehen ist, eine Wischleisteneinheit 22 und die Spoilereinheit 18 an der Federschiene 12 zu fixieren (vgl. auch Fig. 2 bis 4). Von den Ausnehmungen 16 ist in Fig. 1 der Übersichtlichkeit halber lediglich eine mit Bezugszeichen versehen.

Die Federschiene 12 ist aus Federstahl ausgebildet. Zudem weist die Federschiene 12 eine in der Längsrichtung 14 ausgerichtete Längserstreckung auf, die wesentlich größer ist als eine jeweilige Quererstreckung der Federschiene 12. Die Federschiene 12 ist als ein länglicher, dünner Körper ausgebildet und weist die Form eines abgeflachten Stabs auf. An der Federschiene 12 ist ein Adapter 28 befestigt. Der Adapter 28 ist dazu vorgesehen, die Scheibenwischblattvorrichtung 10 über einen Wischarm 30 an einer Karosserie eines Fahrzeugs (nicht dargestellt) lösbar anzubringen. Die Scheibenwischblattvorrichtung 10 kann über den Adapter 28 an dem Wischarm 30 des Fahrzeugs schwenkbar eingehängt werden. In dem gezeigten Ausführungsbeispiel ist der Adapter 28 aus Blech hergestellt und mit der Federschiene 12 verschweißt. Der Adapter 28 ist insbesondere bezüglich der Längsrichtung 14 mittig auf der Federschiene 12 angeschweißt. Es versteht sich von selbst, dass der Adapter 28 in Machart, Material und Befestigung als in höchstem Maße variabel anzusehen ist. Die nachfolgende Beschreibung der erfindungsgemäßen Scheibenwischblattvorrichtung 10 geht vereinfachend von dem Adapter 28 der besagten Machart aus und vernachlässigt zur Vereinfachung eventuelle Abweichungen in Montagereihenfolge und/oder Detaillösungen, wie sie ein Fachmann als nötig erachten wird, wenn er die erfindungsgemäße Scheibenwischblattvorrichtung 10 mit einem Adapter anderer Machart realisieren möchte.

Die Befestigungseinheit 20 ist einteilig ausgebildet und erstreckt sich bezüglich der Längsrichtung 14 über die gesamte Längserstreckung der Federschiene 12. Ferner ist die Befestigungseinheit 20 derart ausgebildet, dass die Befestigungseinheit 20 in dem montierten Zustand in die Ausnehmungen 16 der Federschiene 12 eingreifen kann, wie dies in Fig. 1 durch Pfeile 34 angedeutet ist. Von den Pfeilen 34 ist in Fig. 1 der Übersichtlichkeit halber lediglich einer mit Bezugszeichen versehen. Die Befestigungseinheit 20 ist aus Kunststoff ausgebildet. Anhand von Fig. 1 kann gesehen werden, dass die Befestigungseinheit 20 drei Bereiche 24, 26, 32 mit differierenden Querschnittsflächen aufweist. Von den drei Bereichen 24, 26, 32 ist in Fig. 1 der Übersichtlichkeit halber jeweils lediglich einer mit Bezugszeichen versehen.

Fig. 2 zeigt die erfindungsgemäße Federschiene 12 und die erfindungsgemäße Befestigungseinheit 20 aus Fig. 1 nach der Montage in einem Querschnitt durch den Bereich 24. Deutlich sichtbar ist, dass die Befestigungseinheit 20 als Klammer ausgebildet ist. In dem in Fig. 2 gezeigten Bereich 24 weist die Befestigungseinheit 20 eine in einer Vertikalrichtung 36 ausgerichtete Längsausdehnung 38 auf, die größer ist als eine Erstreckung der Federschiene 12 in der Vertikalrichtung 36. Die Befestigungseinheit 20 greift in dem montierten Zustand in die Ausnehmungen 16 der Federschiene 12 ein. Insbesondere weist die Befestigungseinheit 20 in dem montierten Zustand bezüglich der Vertikalrichtung 36 einen Abschnitt 40 oberhalb der Federschiene 12 und einen Abschnitt 42 unterhalb der Federschiene 12 auf. In dem montierten Zustand sind die Abschnitte 40, 42 durch die Federschiene 12 getrennt. Die Befestigungseinheit 20 weist zudem eine Nut 44 auf, die die Abschnitte 40, 42 trennt. Die Nut 44 erstreckt sich bezüglich einer Querrichtung 46 beidseitig an der Befestigungseinheit 20. Zudem erstreckt sich die Nut 44 in der Längsrichtung 14 über die gesamte Befestigungseinheit 20, insbesondere über eine gesamte Ausdehnung der Bereiche 24, 26, 32. Die Nut 44 ist dazu vorgesehen, in dem montierten Zustand die Federschiene 12 aufzunehmen. Insbesondere kann durch die Nut 44 erreicht werden, dass die Befestigungseinheit 20 die Federschiene 12 in dem montierten Zustand bezüglich der Vertikalrichtung 36 beidseitig hintergreift. Die Befestigungseinheit 20 weist insgesamt vier Vorsprünge 52, 54 auf, wovon bezüglich der Vertikalrichtung 36 jeweils zwei Vorsprünge 52 in dem Abschnitt 40 oberhalb der Federschiene 12 und zwei Vorsprünge 54 in dem Abschnitt 42 unterhalb der Federschiene 12 angeordnet sind. Die Vorsprünge 52 sind von den Vorsprüngen 54 durch die Nut 44 getrennt. Insbesondere sind die Vorsprünge 52, 54 bezüglich der Vertikalrichtung 36 als Begrenzungsflächen der Nut 44 ausgebildet. Die Vorsprünge 52, 54 sichern die Befestigungseinheit 20 bezüglich der Vertikalrichtung 36 vor einem ungewollten Lösen aus der Federschiene 12. Ferner weist die Befestigungseinheit 20 zwei Klemmmittel 48 auf. Die Klemmmittel 48 sind als Haltenasen ausgebildet und dazu vorgesehen, die Wischleisteneinheit 22 indem montierten Zustand zu fixieren.

Bei einer Montage der Befestigungseinheit 20 an der Federschiene 12 wird zunächst die Befestigungseinheit 20 in die Ausnehmungen 16 der Federschiene 12 eingebracht.

Dazu wird die Befestigungseinheit 20 in der Querrichtung 46 derart einer Krafteinwirkung ausgesetzt, dass die Klemmmittel 48 aufeinander zubewegt werden bis nahezu ein Kontakt der Klemmmittel 48 hergestellt ist. In diesem Zustand ist bezüglich der Querrichtung 46 ein Abstand der zwei Vorsprünge 52 der Befestigungseinheit 20 kleiner als eine Breite der Ausnehmungen 16 in der Querrichtung 46, so dass die Befestigungseinheit 20 problemlos in die Ausnehmungen 16 eingeführt werden kann. Nach einer Beendigung der Krafteinwirkung auf die Befestigungseinheit 20 bewegen sich die Klemmmittel 48 bezüglich der Querrichtung 46 auseinander. Dadurch kann ein Einrasten der Federschiene 12 in die Nut 44 der Befestigungseinheit 20 erreicht werden. Die Vorsprünge 52, 54 sichern die Befestigungseinheit 20 bezüglich der Vertikalrichtung 36 vor einem ungewollten Lösen aus der Federschiene 12.

Um zudem ein ungewolltes Lösen der Befestigungseinheit 20 aus der Federschiene 12 in dem montierten Zustand zu vermeiden, weist die Befestigungseinheit 20 die zwei Klemmmittel 48 auf. Die Klemmmittel 48 bilden mit einem bezüglich der Vertikalrichtung 36 darüber angeordneten Teilbereich der Befestigungseinheit 20 eine Wischleistenaufnahmenut 50 aus. Die Wischleistenaufnahmenut 50 erstreckt sich über eine in der Längsrichtung 14 ausgerichtete gesamte Längserstreckung der Befestigungseinheit 20. Das ungewollte Lösen ist durch die Wischleisteneinheit 22 vermieden. Die Wischleisteneinheit 22 wird nach der Montage der Befestigungseinheit 20 an der Federschiene 12 in die Wischleistenaufnahmenut 50 der Befestigungseinheit 20 eingezogen. In diesem Zustand fungiert die Wischleisteneinheit 22 als ein Klemmkörper, der ein zusammendrücken der Befestigungseinheit 20 in der Querrichtung 46 verhindert. Die Befestigungseinheit 20 ist in dem montierten Zustand durch die Wischleisteneinheit 22 fixiert. In dem montierten Zustand ist die Befestigungseinheit 20 demnach in zweifacher Hinsicht vor dem ungewollten Lösen gesichert. Damit konnte gezeigt werden, dass die Befestigungseinheit 20 dazu vorgesehen ist, die Wischleisteneinheit 22 an der Federschiene 12 zu fixieren.

Der Bereich 26 ist als Spalt ausgebildet. Zusätzlich zu einer Ausbildung als bezüglich der Vertikalrichtung 36 oberhalb des unteren Abschnitts 42 ausgebildeter Spalt kann ein Spalt ebenfalls in dem Abschnitt 42 angeordnet sein, wie dies beispielhaft für den mit Bezugszeichen versehenen Bereich 26 in Fig. 1 dargestellt ist. Die Befestigungseinheit 20 ist außer in einem Teilbereich, der in dem montierten Zustand auf Höhe des Adapters 28 zu liegen kommt, derart ausgebildet, dass zwei Bereiche 24 jeweils durch einen Bereich 26 getrennt sind. In dem Teilbereich, der in dem montierten Zustand auf Höhe des Adapters 28 zu liegen kommt, ist die Befestigungseinheit 20 derart ausgebildet, dass zwei Bereiche 32 jeweils durch einen Bereich 26 getrennt sind. Im Folgenden soll lediglich ein Bereich 26 beschrieben werden, da alle Bereiche 26 identisch ausgebildet sind. Der Bereich 26 weist bezüglich der Längsrichtung 14 eine Erstreckung auf, die einem als Ausnehmungstrennsteg 56 ausgebildeten Abstand der Ausnehmungen 16 in der Längsrichtung 14 entspricht. Der Bereich 26 kommt in dem montierten Zustand an einem der Ausnehmungstrennstege 56 zu liegen. Insbesondere sind der Bereich 26 und der Ausnehmungstrennsteg 56 in dem montierten Zustand in einem direkten Kontakt. Der Bereich 26 ist dazu vorgesehen, dass die Befestigungseinheit 20 in dem montierten Zustand in die Ausnehmungen 16 der Federschiene 12 eingreifen kann. Vorzugsweise ist der Bereich 26 zudem dazu vorgesehen, eine Biegesteifigkeit der Befestigungseinheit 20 und damit einen Einfluss der Befestigungseinheit 20 auf die Federschiene 12 zu reduzieren. Der Bereich 26 weist bezüglich der Vertikalrichtung 36 eine Längsausdehnung 58 auf, welche geringer ist als die Längsausdehnung 38 des Bereichs 24. Die Längsausdehnung 58 entspricht bezüglich der Vertikalrichtung 36 einer Erstreckung des Abschnitts 42 der Befestigungseinheit 20 unterhalb der Nut 44. Demnach grenzt der Bereich 26 in dem montierten Zustand der Befestigungseinheit 20 an der Federschiene 12 bezüglich der Vertikalrichtung 36 an die Federschiene 12 an.

Der Bereich 32 ist auf den Teilbereich der Befestigungseinheit 20 beschränkt, der in dem montierten Zustand auf Höhe des Adapters 28 zu liegen kommt. Der Bereich 32 ist ähnlich dem Bereich 24 der Befestigungseinheit 20 ausgebildet. Lediglich eine Längsausdehnung des Bereichs 32 ist geringer als die Längsausdehnung 38 des Bereichs 24. Die Längsausdehnung des Bereichs 32 ist jedoch größer als die Längsausdehnung 58 des Bereichs 26. Der Bereich 32 weist im Vergleich zu dem Bereich 24 einen gekürzten oberen Abschnitt 40 auf, um einen Bauraum in dem Teilbereich der Befestigungseinheit 20, der in dem montierten Zustand auf Höhe des Adapters 28 zu liegen kommt, zu vergrößern.

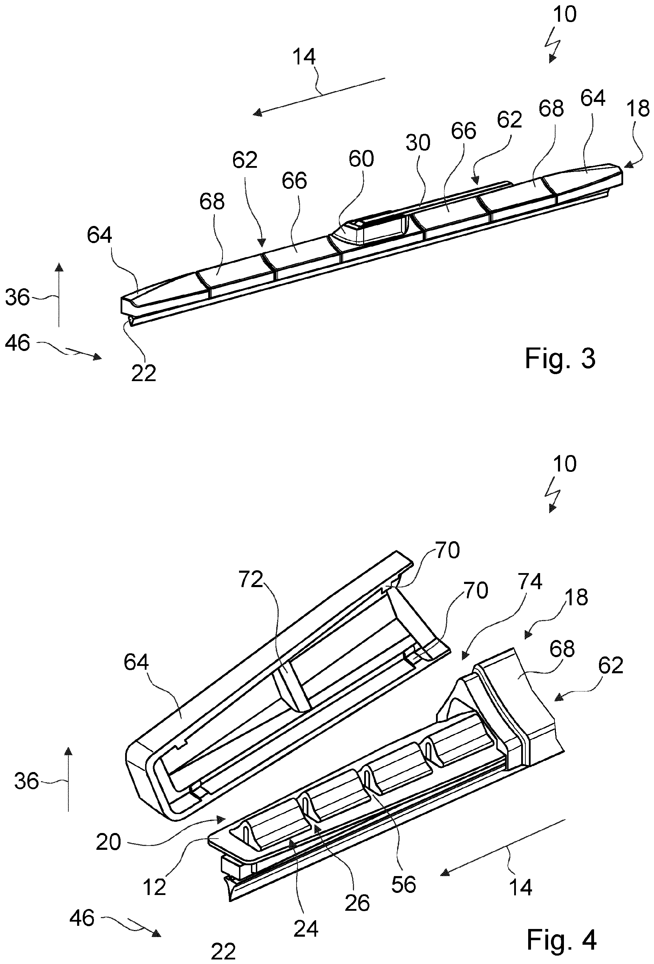

Fig. 3 zeigt die erfindungsgemäße Scheibenwischblattvorrichtung 10 in einem montierten Zustand. Zudem zeigt Fig. 3 ein erfindungsgemäßes Wischblatt mit der erfindungsgemäßen Scheibenwischblattvorrichtung 10. Zu erkennen ist ebenfalls, dass die Spoilereinheit 18 mehrteilig ausgebildet ist. Die Spoilereinheit 18 umschließt in dem montierten Zustand die Federschiene 12 und die Befestigungseinheit 20 nahezu vollständig. Die Spoilereinheit 18 umfasst einen Adapterspoiler 60, einen Mittelspoiler 62 und einen Endspoiler 64. Der Adapterspoiler 60, der Mittelspoiler 62 und der Endspoiler 64 werden im Folgenden der Einfachheit halber als Spoilersegmente 60, 62, 64 bezeichnet. Die Spoilersegmente 60, 62, 64 sind jeweils als spritzgegossene Bauteile aus einem inelastischen Kunststoff ausgebildet. Zudem sind die Spoilersegmente 60, 62 64 derart miteinander verbunden, dass eine Bewegung der Federschiene 12 und insbesondere der Scheibenwischblattvorrichtung 10 ungehindert erfolgen kann. Der Adapterspoiler 60 ist dazu vorgesehen, den Adapter 28 zu einem Anschluss an den Wischarm 30 zu verkleiden. Ferner ist der Adapterspoiler 60 ist dazu vorgesehen, einen Anschluss zu dem Mittelspoiler 62 herzustellen. Der Mittelspoiler 62 ist dazu vorgesehen, die Scheibenwischblattvorrichtung 10 bis zu dem Endspoiler 64 zu verkleiden. Der Endspoiler 64 ist dazu vorgesehen, zwei entgegengesetzte Enden der Scheibenwischblattvorrichtung 10 zu verkleiden und die Spoilereinheit 18 abzuschließen.

Der Mittelspoiler 62 weist bezüglich der Längsrichtung 14 eine Erstreckung mit einem konstanten Querschnitt auf und ist aus mehreren Modulen 66, 68 ausgebildet, wovon in dem in Fig. 3 gezeigten Ausführungsbeispiel zwei dargestellt sind. Eine solche modulare Bauweise ist von Vorteil, um eine Anpassung der Spoilereinheit 18 an bezüglich der Längsrichtung 14 verschiedene Erstreckungen verschieden ausgebildeter Wischblätter zu ermöglichen. Die Module 66, 68 können dann innerhalb eines Baukastensystems durch Kombination untereinander für verschiedene Erstreckungen von Wischblättern verwendet werden. Die Notwendigkeit, für jede benötigte Erstreckung des Wischerblatts einen kompletten Satz an Spoilersegmenten 60, 62, 64 herstellen zu müssen, kann somit vermieden werden, was einen zu einer Herstellung notwendigen Aufwand reduziert. Es versteht sich von selbst, dass auch dann ein erfindungsgemäßes Wischblatt vorliegt, wenn die Spoilereinheit 18 einen Mittelspoiler 62 mit einem von einem konstanten Querschnitt abweichenden Querschnitt aufweist und/oder der Mittelspoiler 62 eine andere Anzahl an Modulen aufweist.

Zu einer Befestigung der Spoilersegmente 60, 62, 64 an der Federschiene 12 sind an den Spoilersegmenten 60, 62, 64 jeweils Befestigungsmittel 70 angebracht (vgl. Fig. 4). Die Befestigungsmittel 70 sind als Schnapphaken ausgebildet und umgreifen in dem montierten Zustand die Federschiene 12 bezüglich der Vertikalrichtung 36. Es ist denkbar, eine Festlegung bezüglich der Längsrichtung 14 der Spoilersegmente 60, 62, 64 ebenfalls mit Hilfe der Befestigungsmittel 70 zu bewerkstelligen. Beispielsweise könnten die Befestigungsmittel 70 in entsprechende Befestigungsausnehmungen (nicht dargestellt) in der Federschiene 12 eingreifen. In dem gezeigten Ausführungsbeispiel weist die Spoilereinheit 18 mehrere Spoilerquerstege 72 auf. Die Spoilerquerstege 72 sind jeweils in den Spoilersegmenten 60, 62, 64 an einer der Federschiene 12 zugewandten Unterseite der Spoilersegmente 60, 62, 64 in einem Teilbereich, der in dem montierten Zustand auf Höhe des Bereichs 26 der Befestigungseinheit 20 sowie auf Höhe der Ausnehmungstrennstege 56 zu liegen kommt, angeordnet. In dem montierten Zustand greifen somit die Spoilerquerstege 72 in die als Spalte ausgebildeten Bereiche 26 der Befestigungseinheit 20 ein. Dadurch kann die Festlegung bezüglich der Längsrichtung 14 der Spoilereinheit 18 und insbesondere der Spoilersegmente 60, 62, 64 erfolgen. Damit konnte gezeigt werden, dass die Befestigungseinheit 20 dazu vorgesehen ist, die Spoilereinheit 18 an der Federschiene 12 zu fixieren.

Durch eine derartige Festlegung der Spoilersegmente 60, 62, 64 bezüglich der Längsrichtung 14 kann erreicht werden, dass ein Kontaktbereich 74 zwischen zwei Spoilersegmenten 60, 62, 64 als eine Überlappung realisiert werden kann. Bei einer Ausgestaltung des Kontaktbereichs 74 als Überlappung zweier Spoilersegmente 60, 62, 64 ist darauf zu achten, dass Freiräume groß genug gestaltet werden, so dass eine Bewegung der Federschiene 12 ungehindert erfolgen kann.

## Patentansprüche

1. Scheibenwischblattvorrichtung mit zumindest einer Federschiene (12), die in Längsrichtung (14) der Federschiene (12) betrachtet eine Vielzahl von Ausnehmungen (16) aufweist, mit zumindest einer Spoilereinheit (18) und mit zumindest einer von der Federschiene (12) getrennt ausgebildeten Befestigungseinheit (20), die in zumindest einem montierten Zustand in die Ausnehmungen (16) der Federschiene (12) eingreift, und dazu vorgesehen ist, eine Wischleisteneinheit (22) und die Spoilereinheit (18) an der Federschiene (12) zu fixieren, **dadurch gekennzeichnet, dass** die Befestigungseinheit (20) in dem montierten Zustand durch die Wischleisteneinheit (22) fixiert ist.

2. Scheibenwischblattvorrichtung nach Anspruch 1, **dadurch gekennzeichnet, dass** die Befestigungseinheit (20) als Klammer ausgebildet ist.

3. Scheibenwischblattvorrichtung nach einem der vorhergehenden Ansprüche, **dadurch gekennzeichnet, dass** die Befestigungseinheit (20) zumindest zwei Bereiche (24, 26) mit differierenden Querschnittsflächen aufweist.

4. Wischblatt mit einer Scheibenwischblattvorrichtung (10) nach einem der vorhergehenden Ansprüche.

## Claims

1. Windscreen wiper blade device with at least one spring rail (12) which, as viewed in the longitudinal direction (14) of the spring rail (12), has a multiplicity of recesses (16), with at least one spoiler unit (18) and with at least one fastening unit (20) which is formed separately from the spring rail (12) and, in at least one mounted state, engages in the recesses (16) of the spring rail (12) and is provided to fix a wiper strip unit (22) and the spoiler unit (18) to the spring rail (12), **characterized in that** the fastening unit (20) is fixed in the mounted state by the wiper strip unit (22).

2. Windscreen wiper blade device according to Claim 1, **characterized in that** the fastening unit (20) is in the form of a clip.

3. Windscreen wiper blade device according to either of the preceding claims, **characterized in that** the fastening unit (20) has at least two regions (24, 26) with differing cross-sectional areas.

4. Wiper blade with a windscreen wiper blade device (10) according to one of the preceding claims.

## Revendications

1. Dispositif de balai d'essuie-glace comprenant au moins un rail à ressort (12) qui, vu dans la direction longitudinale (14) du rail à ressort (12), présente une pluralité d'évidements (16), comprenant au moins une unité de déflecteur (18) et comprenant au moins une unité de fixation (20) réalisée de manière séparée du rail à ressort (12), laquelle, dans au moins un état monté, s'engage dans les évidements (16) du rail à ressort (12), et est prévue pour fixer une unité de raclette de balai d'essuie-glace (22) et l'unité de déflecteur (18) au rail à ressort (12), **caractérisé en ce que** l'unité de fixation (20) est fixée par l'unité de raclette de balai d'essuie-glace (22) dans l'état monté.

2. Dispositif de balai d'essuie-glace selon la revendication 1, **caractérisé en ce que** l'unité de fixation (20) est réalisée sous forme de pince.

3. Dispositif de balai d'essuie-glace selon l'une quelconque des revendications précédentes, **caractérisé en ce que** l'unité de fixation (20) présente au moins deux régions (24, 26) avec des surfaces différentes en section transversale.

4. Balai d'essuie-glace comprenant un dispositif de balai d'essuie-glace (10) selon l'une quelconque des revendications précédentes.
